Europäisches Patentamt

(19) European Patent Office

Office européen des brevets

(11) Veröffentlichungsnummer: **0 152 877**
**B1**

# (12) EUROPÄISCHE PATENTSCHRIFT

(45) Veröffentlichungstag der Patentschrift:
04.11.87

(51) Int. Cl.⁴: **B 62 D 1/04**

(21) Anmeldenummer: **85101330.0**

(22) Anmeldetag: **08.02.85**

(54) **Kraftfahrzeuglenkrad.**

(30) Priorität: **18.02.84 DE 3405981**

(43) Veröffentlichungstag der Anmeldung:
**28.08.85 Patentblatt 85/35**

(45) Bekanntmachung des Hinweises auf die Patenterteilung:
**04.11.87 Patentblatt 87/45**

(84) Benannte Vertragsstaaten:
**DE FR GB IT NL SE**

(56) Entgegenhaltungen:
**EP-A-0 027 293**
**DE-C-806 827**
**US-A-1 432 015**
**US-A-2 745 581**
**US-A-2 863 015**

(73) Patentinhaber: **Iveco Magirus Aktiengesellschaft,
Schillerstrasse 2, D-7900 Ulm/Donau (DE)**

(72) Erfinder: **Betz, Hans- Werner, Schwörhausgasse 10,
D-7900 Ulm (DE)**

(74) Vertreter: **Socha, Peter, Iveco Magirus AG
Postfach 2740 Schillerstrasse 2, D-7900 Ulm (DE)**

EP 0 152 877 B1

**Beschreibung**

Die Erfindung betrifft ein Lenkrad für Kraftfahrzeuge, mit wenigstens einer die Nabe mit dem Lenkradkranz verbindenden Speiche, wobei die vergleichsweise breit ausgebildete Speiche einen Hohlraum zur Aufnahme von losen Gegenständen aufweist, welcher durch einen die Speichenoberfläche bildenden öffenbaren Deckel abgedeckt ist.

Da ein Kraftfahrzeuglenkrad im zentralen Bedienungsbereich eines Fahrzeuglenkers liegt, wird es nach dem Stand der Technik vielfach mit zusätzlichen Bedienungselementen versehen, die bei Betätigung wichtige Zusatzfunktionen des Fahrzeugs übernehmen, wie beispielsweise Hupen oder Blinken. An breit ausgebildeten Lenkradspeichen können einzelne Fingertasten (vgl. DE-OS-30 18 247) oder sogar umfangreiche Tastaturenfelder (vgl. DE-OS-31 11 339) angeordnet sein, die Bedienungsglieder von Bordcomputern des Kraftfahrzeuges sind.

Kraftfahrzeuge, insbesondere Nutzfahrzeuge, weisen auch nach dem Stand der Technik breite Lenkradspeichen auf, die als Auflagefläche und Schreibunterlage z. B. zum Ausfüllen von Tachographenscheiben dienen (vgl. MAN-Veröffentlichung in "Omnibusrevue" Heft Nr. 10, Seiten 523 und 524, Oktober 1983, 34. Jahrgang).

Aus der DE-PS-806 827 ist ferner ein Lenkrad gemäß der eingangs erwähnten Gattung bekannt. Diese bekannte Anordnung ermöglicht zwar die Unterbringung von losen Gegenständen innerhalb der Lenkradspeiche. In dieser Druckschrift ist allerdings nicht beschrieben, wie der Deckel für den die Gegenstände aufnehmenden Hohlraum betätigt wird. Gemäß der Zeichnungsfigur 3 ist der bekannte Deckel offensichtlich in eine obere Randausnehmung des Hohlraums einzudrücken bzw. zum Öffnen durch Erfassen eines hochgebogenen Deckelrandes vollständig zu entfernen. Diese Handhabung des Deckels ist umständlich. Ferner ist der hochgebogene Deckelrand grundsätzlich hinderlich beim Betätigen des Lenkrades und birgt darüberhinaus auch eine Verletzungsgefahr. Schließlich kann der bekannte Deckel leicht verlorengehen.

Der vorliegenden Erfindung liegt die Aufgabe zugrunde, ein Lenkrad der zur Rede stehenden Gattung zu schaffen, welches einfach im Aufbau ist, leicht und sicher, also auch gefahrenfrei handhabbar ist, ohne Beeinträchtigung seiner Grundfunktion des Lenkens möglichst viele zusätzliche Aufgaben zu erfüllen vermag und bei allem ein gutes Erscheinungsbild aufweist.

Diese Aufgabe wird bei einem Lenkrad der eingangs erwähnten Gattung erfingungsgemäß dadurch gelöst, daß der Deckel aufklappbar und als Hupenkontakt ausgebildet ist.

Die Erfindung löst die gestellte Aufgabe mit besonders einfachen Mitteln, was keiner näheren Erläuterung bedarf. Es sei jedoch bessonders hervorgehoben, daß durch die erfindungsgemäße Ausbildung des Deckels auf einfache und sichere Weise mindestens zwei Funktionen realisiert werden, nämlich durch das Hochklappen des Deckels dessen Öffnen sowie in Gegenrichtung durch Herunterdrücken des Deckels die Betätigung der Hupe. Somit entfällt auch ein separater Hupenknopf. Wird mithin der geschlossene Deckel (bei einer bevorzugten Ausführung der Erfindung, bei welcher die Speichenoberfläche einschließlich Deckel im wesentlichen ebenflächig ausgebildet ist) als Schreibunterlage verwendet, so kann ein Schreiben nicht während der Fahrt vorgenommen werden, da ansonsten die Hupe betätigt werden würde. Es muß zuvor der Motor abgestellt werden. Dies schafft zusätzliche Sicherheit.

Bei einer anderen vorteilhaften Ausgestaltung der Erfindung weist der Hohlraum einen unteren Zugang zur Lenksäulenbefestigungseinrichtung auf. Der Zugang kann im Hohlraum offen oder zusätzlich abgedeckt sein. Auf diese Weise ist die zentrale Lenksäulenbefestigung von außen leicht erreichbar und dennoch mit Hilfe einfacher Mittel bei Normalbenutzung des Fahrzeugs optisch ansprechend abgedeckt.

Der Speichenhohlraum kann auch quadratischen oder rechteckigen Zuschnitt besitzen, um beispielsweise Kraftfahrzeugpapiere aufnehmen zu können, die damit im unmittelbaren Bereich des Fahrers liegen. Dies ist besonders bei einem Fahrerwechsel von Speditionsfahrzeugen von Vorteil: Die Fahrzeugpapiere verbleiben mithin immer beim Fahrzeug.

Auch kann in zweckmäßiger Weiterbildung der Erfindung der Deckel mit einem Absperrschloß versehen sein, um den Inhalt des Hohlraums gegen Diebstahl zu sichern.

Weitere Merkmale der Erfindung sind in den Unteransprüchen angeführt.

Die Erfindung wird nachfolgend anhand eines Ausführungsbeispiels unter Bezugnahme auf die Zeichnung näher erläutert; es zeigen:

Fig. 1 in schematischer Teildraufsicht ein Kraftfahrzeuglenkrad mit breiter Speiche,

Fig. 2 eine schematische Seitenansicht des Lenkrads nach Fig. 1 und

Fig. 3 einen Schnitt durch die Speiche des Lenkrads nach Fig. 1 längs der Linie A-B.

Das in der Zeichnung dargestellte Lenkrad 1 eines Nutzkraftfahrzeugs ist als sogenanntes Einspeichenlenkrad ausgebildet und besitzt eine vergleichsweise breite Speiche 4.

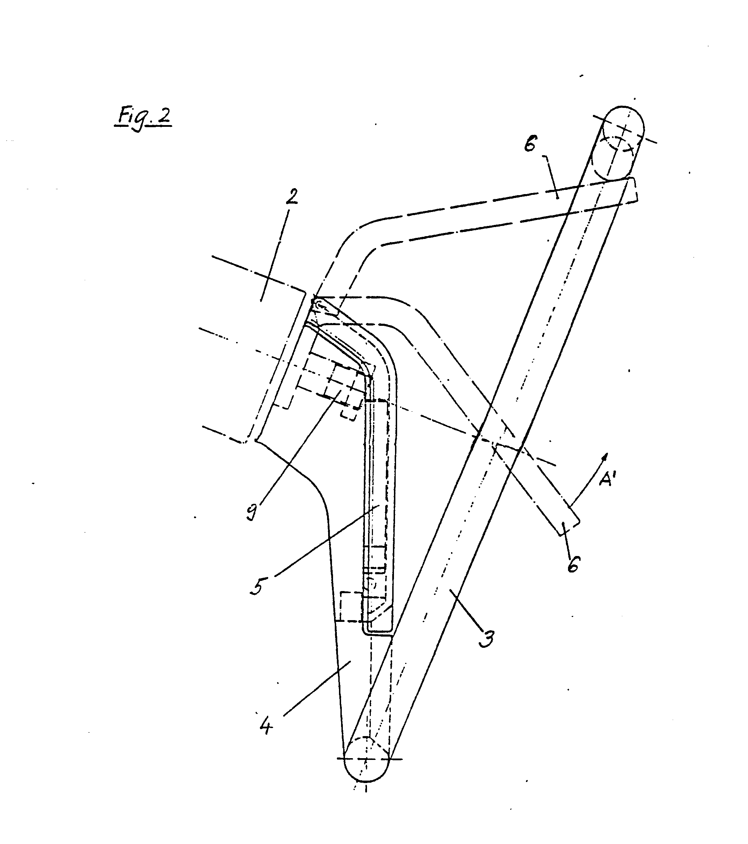

Die Speiche 4 ist an ihrer Unterseite mit dem Lenkradkranz 3 und mit ihrer Oberseite mit der zentralen Lenkradnabe 2 über eine Befestigungseinrichtung 9 verbunden. Die Speiche umfaßt einen von der Fahrerseite her zugänglichen Hohlraum 5, welcher durch einen aufklappbaren, die Speichenoberfläche bildenden Deckel 6 abgedeckt ist, der seinerseits um eine Querachse der Speiche oberseitig angelenkt ist und aus einer den Hohlraum 5 verschließenden Lage in Schwenkrichtung A' gemäß Fig. 2 im Gegenuhrzeigersinn nach oben geschwenkt werden kann, bis er gegen den oberen Lenkradkranz 3 in einer arretierenden Endstellung anschlägt. In der letztgenannten Stellung ist der Hohlraum vom Fahrer her frei zugänglich.

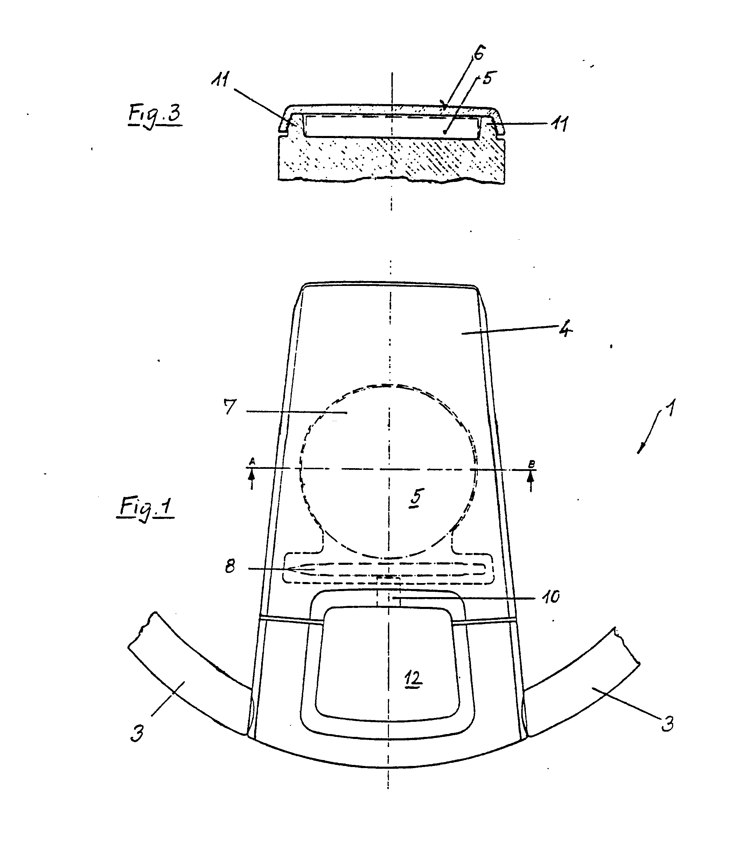

Das Querschnittsprofil des Rohlraums 5 sowie des Deckels 6 ist insbesondere aus Fig. 3 ersichtlich. Insbesondere weist der Hohlraum seitliche Speichenränder 11 auf, über die die Seitenränder des Deckels 6 konisch nach unten gezogen sind, um einen guten dichten klapperfreien Sitz des Deckels 6 auf dem Speichengrundkörper sicherzustellen. In der den Hohlraum 5 verschließenden Stellung kann der Deckel 6 über ein unterseitiges Absperrschloß 10 verschlossen werden, um die im Hohlraum 5 abgelegten losen Gegenstände gegen Diebstahl zu sichern. Das Absperrschloß 10 befindet sich im wesentlichen in der Ebene der Speiche 4 und ist von einem Speichendurchgang 12 her zugänglich. Der Hohlraum 5 gemäß Ausführungsbeispiel ist integriert ausgebildet, jedoch zweigeteilt. Der eine gemäß Fig. 1 obere Teil des Hohlraums 5 ist in Draufsicht im wesentlichen rund und dient als Tachographenscheibenaufnahme 7. Der andere gemäß Zeichnung untengelegene Teil des Hohlraums 5 verläuft in Querrichtung des Lenkrads und dient zur Aufnahme 8 eines Schreibstifts.

Der Deckel 6 kann auch bezüglich des Hohlraums 5 bzw. bezüglich des Grundkörpers der Speiche 4 nach außen hin federvorgespannt und als Hupenkontakt ausgebildet sein. Ein derartiger ebenflächiger als Schreibfläche benutzbarer Deckel kann mithin während der Fahrt nicht als Schreibunterlage benutzt werden, da dann diese Schreibflächenklappe als Hupenkontakt fungiert.

**Patentansprüche**

1. Lenkrad (1) für Kraftfahrzeuge, mit wenigstens einer die Nabe (2) mit dem Lenkradkranz (3) verbindenden Speiche (4), wobei die vergleichsweise breit ausgebildete Speiche (4) einen Hohlraum (5) zur Aufnahme von losen Gegenständen aufweist, welcher durch einen die Speichenoberfläche bildenden öffenbaren Deckel (6) abgedeckt ist,
dadurch gekennzeichnet,
daß der Deckel (6) aufklappbar und als Hupenkontakt ausgebildet ist.

2. Lenkrad nach Anspruch 1,
dadurch gekennzeichnet,
daß die Speichenoberfläche einschließlich Deckel (6) im wesentlichen ebenflächig ausgebildet ist.

3. Lenkrad nach Anspruch 1 oder 2,
dadurch gekennzeichnet,
daß zumindest ein Teil des in der Tiefe flachen Hohlraums (5) rund und als Tachographenscheibenaufnahme (7) ausgebildet ist.

4. Lenkrad nach Anspruch 3,
dadurch gekennzeichnet,
daß der Hohlraum (5) zumindest zweigeteilt ist, wobei ein Hohlraumteil als Schreibstiftaufnahme (8) ausgebildet ist.

5. Lenkrad nach einem der Ansprüche 1 bis 4,
dadurch gekennzeichnet,
daß der Hohlraum (5) einen unteren Zugang zur Lenksäulenbefestigungseinrichtung (9) aufweist.

6. Lenkrad nach einem der Ansprüche 1 bis 5,
dadurch gekennzeichnet,
daß eine einzige breite Lenkradspeiche (4) vorgesehen ist.

7. Lenkrad nach einem der Ansprüche 1 bis 6,
dadurch gekennzeichnet,
daß der Deckel (6) ein Absperrschloß (10) aufweist.

8. Lenkrad nach einem der Ansprüche 1 bis 7,
dadurch gekennzeichnet,
daß der Deckel (6) nach oben bis zu einer Arretierungsendstellung mit Anschlag am Lenkradkranz (3) aufklappbar ist.

9. Lenkrad nach einem der Ansprüche 1 bis 8,
dadurch gekennzeichnet,
daß der Deckel (6) seitlich über den Hohlraum (5) gezogen ist.

**Claims**

1. A steering wheel (1) for a motor vehicle, the steering wheel having at least one spoke (4) connecting the wheel's hub (2) to its rim (3), in which the - comparatively broad - spoke is provided with a cavity (5) which serves to accomodate loose articles and which is shielded by an openable cover (6) arranged to form the spoke's top surface, characterized in that the cover (6) is hinged and forms a horn contact.

2. A steering wheel according to claim 1, characterized in that the spoke's surfaces including the top one formed by the cover (6) are substantially flat.

3. A steering wheel according to claim 1 or claim 2,
characterized in that at least a section of the - shallow - cavity (5) is circular and serves as a mount (7) for a tachograph glass.

4. A steering wheel according to claim 3, characterized in that the cavity (5) is divided into at least two compartments one of which serves as a receptacle (8) for a pencil.

5. A steering wheel according to any of the claims 1 to 4,
characterized in that the cavity (5) has, in its lower part, an access to a device (9) for fastening the steering wheel to the steering column.

6. A steering wheel according to any of the claims 1 to 5,
characterized in that it has only one broad spoke (4).

7. A steering wheel according to any of the claims 1 to 6,
characterized in that the cover (6) is fitted with a lock (10).

8. A steering wheel according to any of the claims 1 to 7,

characterized in that the cover (6) is upwardly openable into a movement-arresting end position reached upon striking the wheel rim (3).

9. A steering wheel according to any of the claims 1 to 8,

characterized in that the cover's (6) lateral edge portions protrude beyond the cavity (5).

**Revendications**

1. Volant de direction (1) pour véhicules automobiles, avec au moins un rayon (4) reliant le moyen (2) à la couronne (3) du volant de direction, le rayon (4) prévu relativement large comportant un espace creuz (5) destiné a recevoir des objets en vrac, cet espace creup étant recouvert par un couvercle (6) susceptible d'être ouvert et constituant la surface du rayon, volant de direction caractérisé en ce que le couvercle (6) est rabattable et constitue un contact d'avertisseur.

2. Volant de direction selon la revendication 1, caractérisé en ce que la surface du rayon, y compris le couvercle (6) est essentiellement plane.

3. Volant de direction selon la revendication 1 ou 2, caractérisé en ce qu'au moins une partie de l'éspace creux (5) plat en profondeur est ronde et constitue un logement (7) pour un disque de tachographes.

4. Volant de direction selon la revendication 3, caractérisé en ce que l'espace creux (5) est divisé tout au moins en deux parties, une partie de cet espace creux constituant un logement (8) pour un stylo inscripteur.

5. Volant de direction selon une des revendications 1 à 4, caractérisé en ce que l'espace creux (5) comporte un accès inférieur vers le dispositif de fixation (9) de la colonne de direction.

6. Volant de direction selon une des revendications 1 à 5, caractérisé en ce qu'il est prévu un unique rayon large (4) du volant de direction.

7. Volant de direction selon une des revendications 1 à 6, caractérisé en ce que le couvercle (6) comporte une serrure de fermeture (10).

8. Volant de direction selon une des revendications 1 à 7, caractérisé en ce que le couvercle (6) est susceptible d'être relevé vers le haut, jusqu'à une position terminale d'arrêt en venant en butée contre la couronne (3) du volant de direction.

9. Volant de direction selen une des revendications 1 à 8, caractérisé en ce que le couvercle (6) est prolongé latéralement pardessus l'espace creux (5).

_Fig.3_

_Fig.1_

11

6

5

11

4

7

1

A

B

5

8

10

12

3

3

_Fig. 2_